(19) Europäisches Patentamt
European Patent Office
Office européen des brevets

(11)  EP 2 182 879 B1

(12)  **EUROPEAN PATENT SPECIFICATION**

(45) Date of publication and mention
of the grant of the patent:
**03.07.2013  Bulletin 2013/27**

(51) Int Cl.:
*A61C 5/02* (2006.01)          *A61C 17/02* (2006.01)
*B01D 19/00* (2006.01)

(21) Application number: 07827716.7

(22) Date of filing: **25.09.2007**

(86) International application number:
**PCT/IT2007/000665**

(87) International publication number:
**WO 2009/028004 (05.03.2009 Gazette 2009/10)**

(54) **SINGLE-ACTING GRAVITY VALVE FOR AUTOMATIC EXPULSION OF GASEOUS BUBBLES FROM A LIQUID CIRCULATING IN CAPILLARY TUBES**

EINFACH WIRKENDES SCHWERKRAFTSVENTIL ZUR AUTOMATISCHEN AUSSTOSSUNG VON GASBLÄSCHEN AUS EINER IN KAPILLARRÖHREN ZIRKULIERENDEN FLÜSSIGKEIT

VANNE GRAVITAIRE À SIMPLE EFFET SERVANT À L'EXPULSION AUTOMATIQUE DE BULLES DE GAZ DANS UN LIQUIDE CIRCULANT DANS DES TUBES CAPILLAIRES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **29.08.2007  IT MI20071700**

(43) Date of publication of application:
**12.05.2010  Bulletin 2010/19**

(73) Proprietor: **Helvodont Limited**
**Dunleer, Co. Louth (IE)**

(72) Inventor: **RIVA, Ermete**
**I-23807 Merate (LC) (IT)**

(74) Representative: **Mocchetti, Ilio G.**
**Brevetti Dott. Ing. DiGiovanni Schmiedt S.r.l.**
**Via Aldrovandi, 7**
**(MM Lima)**
**I-20129 Milano (IT)**

(56) References cited:
**WO-A-97/10037       WO-A-2007/052317**
**GB-A- 2 072 807     US-A- 5 123 938**

## Description

<u>Field of application of the invention</u>

The present invention relates to circulation of various kinds of liquids in tubes of a small diameter or, if more precisely stated, to a single-acting gravity valve for automatic expulsion of gaseous bubbles from a liquid circulating in capillary tubes.

<u>Review of the known art</u>

The applications most commonly used in the above technique are of a medical nature in which use is generally made of small positive-displacement pumps (syringes, peristaltic pumps, etc.) connected to thin flexible cannulae with an infusion needle at their ends. As is well-known, positive-displacement pumps carry previously set and constant quantities of liquid apart from the pressure applied to the liquid itself, so that an accurate quantity of a drug in aqueous solution can be metered out. The chief problems encountered in infusing drugs into the human body by intravenous injection are described in detail in the patent US 6932114-B2 entitled "Fluid delivery system and method". This patent in particular emphasises the need for prompt discovery of gaseous bubbles in the fluids in circulation, highly dangerous if carried into the patient's blood, and for revealing high pressure caused by any possible obstructions in the cannulae. This patent, among others mentioned, resorts to means for revealing the presence of bubbles in the fluid for the precise purpose of operating a valve mounted in series in the tubes to block circulation. Pressure sensors are also used to discover any obstructions in the tubes, and flow sensors to confirm that circulation is normal. All this makes for greater safety in medical treatment where blood circulation is concerned, but the solutions proposed involve complex and costly equipment on account of the presence of sophisticated sensors and the difficulty of setting them correctly. For this reason it would not be advantageous to apply the teachings contained in the patent to applications other than that specifically indicated.

The application for an international patent WO 2007/052317 published on 23 May 2007 in the name of the same Applicant (Italian priority No. MI2005A002076 dated 31 October 2005) describes an apparatus for endodontic treatment comprising peristaltic pumps connected to thin silicon rubber tubes of a capillary diameter in which an enzymatic solution circulates, in the pulp cavity and root canals of a tooth to be devitalized, at a controlled temperature and at practically ambient pressure. Unlike the above known art, there are no means for detecting bubbles but only a hydraulic pressure sensor for blocking the circulation in the event of an excessive rise in pressure, to avoid damage to tissues outside the tooth: gums, alveolus.

<u>Technical problems raised</u>

The gas bubbles trapped in the liquid hinder its proper circulation in the capillary tubes, requiring a pressure level from the pump higher than ambient pressure to maintain the rate of delivery needed by the user. To understand how the bubbles induce overpressure in the capillary tubes, reference must be made to the law on capillarity which states that the interface between a liquid contained in a capillary tube and the air above the liquid, surface tension T (force per unit of length) is created on the <u>contour</u> of the free surface of the liquid in contact with the capillary tube, said tension having a component along the wall of the tube in a direction such as will balance the rise and fall of liquid in the tube in relation to ambient pressure in the absence of capillarity. To get the liquid moving this component must be overcome. Surface tension T is directly proportional to a constant typical of each liquid, and is inversely proportional to the diameter of the capillary tube. Surface pressure $p_T$ exercised by surface tension T is: $p_\tau = 4_T / D$, wherein D is the capillary diameter. The constant T for water is 20°C equivalent to $73.10^{-3}$ N/m which shows that pressure $p_\tau$ to be overcome for each bubble is very low. Experiments have shown however that numerous bubbles (even as many as 300) can be simultaneously present in one metre of capillary tube with a diameter of about 1.2 mm, and that the individual pressure levels of $p_\tau$ add up together to reach high levels, even several dozen kPa!.

The levels of overpressure that the pump is required to provide for the reasons given above can be harmful in applications other than medical, such as for example in chemical, chemico-physical and biological analysis. On the basis of experience gained by the Applicant, an analysis will further on be made of the difficulties that arise in medicine and dentistry, but this without in any way limiting the subject of the invention.

Although the apparatus described in WO 2007/052317 has brought in considerable improvements in endodontic treatment, not all the problems of devitalization at ambient pressure have yet been solved because bubbles can always form in the solution in circulation, these being generated during reactions by enzymes and chelants that react with the tissues. In the apparatus concerned the presence of bubbles is ascertained indirectly by measuring the overpressure. The overpressure sensor only takes effect when pressure reaches a preset level and this causes certain drawbacks. Pressure higher than ambient pressure can lead to an outflow of the chemical and pharmacological substances from the damaged pulp cavity (for example by decay) or from the pervious root apical foramen. Further, the presence of gas bubbles in the circulating liquid hinders contact between the enzymatic solution and the tissues to be broken down. On account of these possible drawbacks, in a small number of cases devitalization must be repeated.

WO 97/10037 discloses a water treatment device for degassing water in pipes, according to the preamble of claim 1.

Object and summary of the invention

Object of the present invention is to avoid the drawbacks created by the presence of gas bubbles trapped in the liquid circulating in the capillary tubes.
To fulfil this object, subject of the invention is a system for circulating fluids in capillary tubes, including an on-off degassing valve as described in claim 1.
Further characteristics of the present invention, considered innovative, are described in the dependent claims.
According to one aspect of the invention, the system includes a single positive-displacement pump, a peristaltic pump for example, operating together with a valve for opening and closing a passage towards a receptacle of liquid for initially filling the circuit and then for circulating through it. According to another aspect of the invention the system includes a second positive-displacement pump that functions only for initially filling the circuit, and then stops so that the passage towards the receptacle holding the liquid becomes obstructed.
According to another aspect of the invention, especially useful where it is used for endodontic treatment, the system includes means for operating said circulation pump, set so that short periods of stoppage alternate with periods of operation, this enabling the gas contained in the bubbles to be expelled through the gravity valve when the pump is inoperative and the simultaneous achievement of baric balance with the environment at a point along the hydraulic circuit, preferably coinciding with the position of the pulp cavity of the tooth to be devitalised. Alternatively, a certain difference in pressure can be reached at the two ends of the user placed in a suitable position along the circuit.
Where the invention is used in fields other than dentistry and where the need for baric balance with the environment is not so great, stoppage of the circulation pump can be avoided by accepting some degree of overpressure depending on the ratio between the speed at which the bubbles form and that at which they are expelled through the gravity valve.

Advantages of the invention

The device described reliably intercepts and eliminates the gaseous bubbles present in the liquids without any need for costly sophisticated equipment such as bubble sensors. The bubbles are eliminated automatically which makes possible continuous or semi-continuous operation (if the additional requirement of baric balance at the ends of the user subsists). It seems that these advantages cannot be achieved by using the systems already known. In applications of the endodontic kind, alternating operation and use of the on-off gravity valve makes it possible to avoid pressure levels higher than those of the environment, caused by the initial presence of air in the capillary tubes and by the presence of gases that may form during chemical reactions in the pulp cavity and in the root canals. In this way an endodontic treatment at practically constant environmental pressure can be carried out with close on 100% of successful treatments.

Short description of the figures

Further purposes and advantages of the present invention will become clear from the following detailed description of an already realized example, and from the attached drawings given for explanatory purposes only, in no way limitative, wherein:

Figure 1 shows a simplified version of the apparatus described in WO 2007/052317, with an operative block 13 representing a single-acting gravity (SAG) valve realized according to the present invention.
Figure 2 shows a longitudinal section of a tooth to be devitalized in which the terminal points of connection to the system of circulation, subject of the present invention, are clearly visible.
Figure 3 shows a longitudinal section along a medial plane of the SAG valve 13, when closed.
Figure 4 shows the section in Figure 3 with the SAG valve 13 open for degassing the fluid.
Figure 5 shows a section similar to that in Figure 3 but descriptive of another realization of the SAG valve.

Detailed description of a preferred form of realizing the invention.

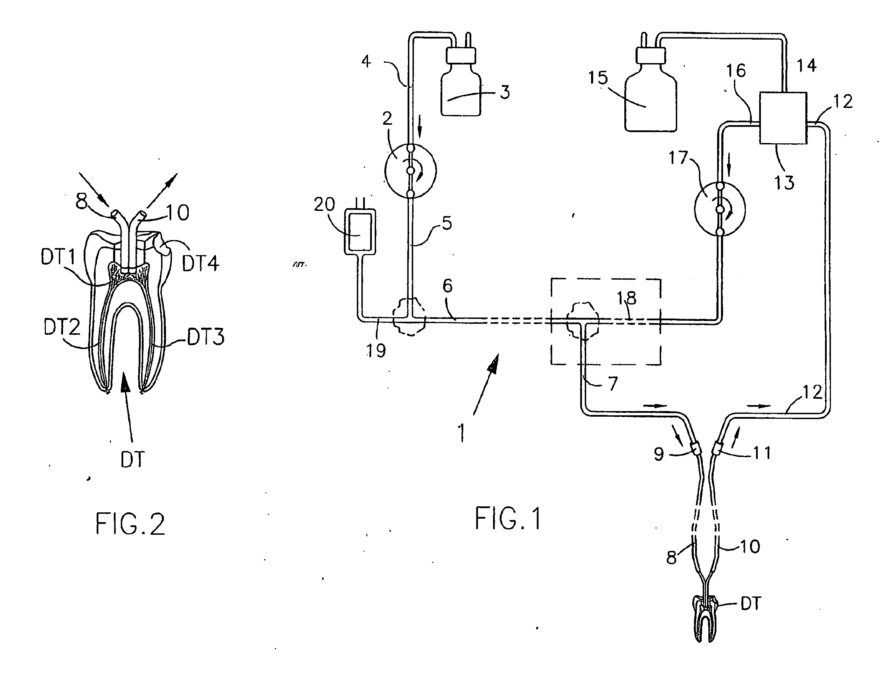

As an improvement on the apparatus for endodontic treatment described in WO 2007/052317, included by reference in the present description, a device has been introduced that will hereinafter be called a "Single-Acting Gravity" valve, expressed as an acronym SAG. As will be explained, the SAG valve makes it possible to carry out endodontic treatment with pressure of the treating liquid in the pulp cavity practically equivalent to atmospheric pressure (1 atm (760 torr) = 101.325 Pascal (Pa)). For the sole purpose of describing the SAG valve in dentistry, a less complex apparatus might be sufficient compared with that for dental devitalization detailed in the previous patent application; at the worst one positive-displacement pump only and an on-off valve would be enough. In that case the pump with the valve open first fills the hydraulic circuit then, with the valve closed, circulates the treatment solution through the pulp cavity of the tooth. With reference to Figure 1, two positive-displacement (peristaltic) pumps, 2 and 17, can be seen, the first for initially filling the hydraulic circuit and the second for keeping the devitalizing solution in circulation. For the sake of simplicity, the means for controlling periods of operation/stoppage of pumps 2 and 17 have been omitted. Pump 2 is connected through a tube 4 to a bottle 3 containing a solution for enzymatic treatment kept at ambient pressure and, through a tube 5, to a point where a tube 6 in the hydraulic circuit, and another tube 19 both branch off, tube 19 being connected to a sensor 20 for pressure of the liquid in the tubes. Tube 6 reaches a second branching point from where two tubes 7 and 18 leave, these being respectively connected to the tooth DT and to the second pump 17. Through a tube 16, pump 17 is also connected to a SAG valve 13 for intercepting and expelling the gas trapped in the liquid circulating in an inflow tube 12 coming from the tooth DT. The SAG valve 13 is also connected to a tube 14 that leads to a bottle 15 where waste liquid is collected and from where a tube reaches the environment through the stopper. The end of tube 7 fits into a connector 9 from where a thin tube enters the pulp cavity. In the same way the end of tube 12 fits into a connector 11 from which departs a second thin tube that also enters the pulp cavity. With the exceptions of the infusion needles 8 and 10 (of a smaller diameter) and of the waste tube 14 (of a larger diameter), all the others are capillary tubes of silicon rubber the internal diameter of which is 1.2 mm. With reference to Figure 2, it will be seen that the (decayed) crown DT4 of the tooth DT has been drilled through to reach the pulp cavity DT1 and the radical canals DT2 and DT3. Inserted in the hole is a small head comprising the two stainless steel tubes 8 and 10, the first of which serves to carry the fluid (liquid or air) into the pulp cavity DT1 and into the root canals DT2 and DT3, while the second is used to carry out-flowing fluid.

Operation includes a stage in which tubes 4, 5, 6, 7, 8, 10, 12, 16, 18 and 19 are filled by the pump 2 that delivers the treatment solution in bottle 3 for a pre-set time during which the solution is brought to body temperature; pump 2 is then stopped, so obstructing tube 5, and pump 17 is activated for the time needed to circulate the solution, as will be explained following a description of the SAG valve.

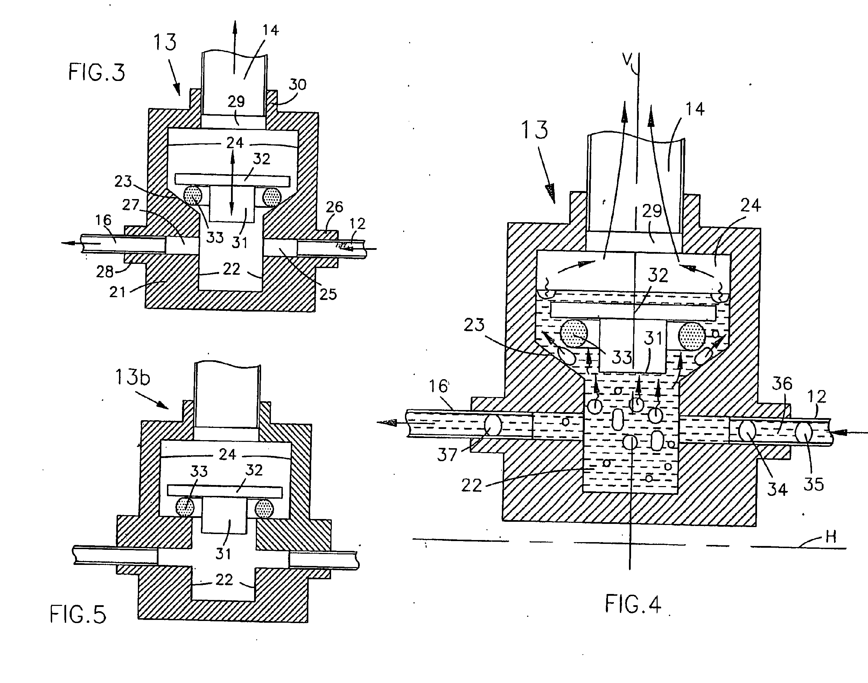

Figure 3 shows a longitudinal section through SAG valve 13 along a plane passing through tubes 12, 14 and 16. As will be seen from the figure the SAG valve 13, placed in series in relation to the path taken by the fluid, consists of a body 21 in which is a cavity of a suitable shape in relation to the adjoining parts 22, 23 and 24. The cavity in body 21 preferably presents circular symmetry in relation to a longitudinal axis. The lower part 22 of the cavity presents a rectangular longitudinal section and, in the side wall bounding it, are holes 25 and 27 for fluid inflow and outflow, their positions coinciding with those of two opposite connections, 26 and 28, for insertion of capillary tubes 12 and 16, one for fluid inflow and the other for outflow. Part 23 of the cavity has a longitudinal section that, starting from the top of the lower chamber 22, widens out funnel-shaped as it reaches the upper chamber 24. This upper chamber has a rectangular longitudinal section with a hole 29 in its upper wall at the position of a connection 30 for the tube 14 carrying waste towards the bottle 15.

Inside the cavity in body 21 a device can be seen for opening and closing the passage 23 that allows chamber 22 to communicate with chamber 24. This is a mobile means of obstruction consisting of a cylindrical body 31 at the top of which is a disk 32 that extends almost as far as the wall bounding chamber 24 but without touching it. The cylindrical body 31 is fitted into a soft o-ring 33, held firm above by the disk 32. The o-ring 33 rests on the oblique wall bounding the passage 23. As regards its construction, the mobile means of obstruction consists of parts 31, 32 and 33 and is placed in position through the hole 29 (which from the drawing would not seem to be so, though reproduction of the SAG valve is not drawn to scale).

The way the system in Figure 1 operates, already briefly explained, is now described in greater detail and with reference to the other figures to show up the fundamental role of the SAG valve 13, first in filling the hydraulic circuit with treatment solution and then in recycling it.

During its introduction the liquid tends to become separated by air in the tubes thus requiring circulation to be maintained at a level of pressure proportional to the number of instances of separation. The air in the tubes must therefore be expelled to reach the minimum pressure level needed for circulating reagents. The liquid containing trapped air flowing in the capillary tube 12 (emerging from the tooth) reaches the cavity 22 in the SAG valve 13. As the means of obstruction 31, 32 and 33 obstruct the only path leading towards the environment, the freed air will cause said means to rise and move into the upper chamber 24 where it is discharged through the tube 14. Expulsion of air and, more in general degassing, is favoured by two factors: A) sudden increase in size of the cross section of tubes at the interface between capillary 12 and cavity 22, causing a reduction in surface pressure $p_T$ exerted by surface tension T; B) freedom for the mobile means of obstruction 31, 32 and 33 to translate upward, pushed by the gas freed from the bubbles that reach the surface on account of the negative pressure gradient. As regards the factor A), diameter of the section crossed by the fluid rises from 1.2 mm in the tube 12 to about 12 mm in the chamber 22, reducing the $p_T$ tenfold. Regarding factor B, the mobile means of obstruction is made of Teflon and weighs only 6 grams; an upward push of 800 Pa above atmospheric pressure is therefore quite sufficient to cause the SAG valve to open.

The operation of degassing the treatment solution is illustrated in Figure 4 where the air/gas bubbles can be seen trapped in the liquid arriving from tube 12 with expulsion of the gas they contain into the atmosphere. The figure shows how the liquid present in tube 12 becomes separated 36 by two air bubbles 34 and 35. Separation by a bubble 37 also takes place in the capillary tube 16. The liquid meniscus is concave because water wets the walls. The best position for the SAG valve is for its base to rest on the horizontal plane corresponding to the axis of symmetry H. In that case the longitudinal axis of symmetry of the mobile means of obstruction 31, 32, 33, is aligned with the vertical axis V so that, in the absence of bubbles, the cylindrical body 31 can partially enter the cavity 22, and the o-ring 33 can entirely rest on the oblique transition wall 23 ensuring closure. Advantageously, the obliquity of the wall 23 enables the SAG valve to remain closed exploiting its own slight inclination. Alignment of the means of obstruction with the vertical axis V creates a uniform section providing an exit path for the gas freed from the bubbles and thus assists degassing. The version 13b of the SAG valve given in Figure 5 shows the difference between it and the previous SAG valve 13, consisting in absence of the tapering part 23. In this case the two chambers 22 and 24 adjoin one another and the o-ring 33 rests directly on the step at the interface between them. The two versions are substantially the same, a preference being felt for the first since it provides a more suitable path for escape of the gas from the bubbles and is less sensitive to small inclinations on the horizontal plane.

Returning to how the system in Figure 1 operates, pump 2 and pump 17 continue working for about 20 seconds, sufficient time for filling the recycling circuit, with the slight addition necessary for creating a hydrostatic load in chamber 24 above the disk 32, and stabilizing closure of the SAG valve 13 (hydrostatic load comprised between 400 and 800 Pa). During this filling stage, air initially present in the capillary tubes is expelled as previously explained.

After pump 2 has stopped, recycling pump 17 continues working for about ten seconds during which time nearly all the air is removed from the liquid passing through chamber 22 in the SAG valve 13. When, during the first ten seconds, pump 17 rotates at maximum speed, differential rates of pressure $\Delta P$, in relation to atmospheric pressure $P_o$ of the liquid in some significant points in the hydraulic circuit, are as follows:

Point a) At chamber 22: $\Delta P_a \approx 600$ Pa.
Point b) At the pressure transducer 20 on pipe 19: $\Delta P_b \approx 50$ kPa.
Point c) At connection 9 on the external circuit entering the tooth DT:

$$\Delta P_c \approx 40 \text{ kPa.}$$

Point d) At connection 11 on the external circuit leaving tooth DT:

$$\Delta P_d \approx 20 \text{ kPa.}$$

It follows that, when pump 17 rotates at full speed, loss of load in the external circuit, consisting of tubes 8 and 10 (each 1 m long) and of the tooth DT, is about 20 kPa. These pressure values, however, are still not the minimum possible on account of the presence of some air bubbles still in the process of removal.

These first ten seconds having expired, the pump 17 is turned off for the next ten seconds giving the liquid in circulation time to stop and reducing load losses to zero. In the conditions of calm so achieved, pressure values at all points in the circuit stand at around 600 Pa determined by opening pressure of the SAG valve 13. During the first stage of calm, a small quantity of liquid is expelled due to elasticity of the tubes entering the cavity 24, in this way helping to maintain the SAG valve 13 in its closed position. During the quiet stage the pump 17 is once again started up for about fifty seconds causing the devitalizing solution to circulate for a time not too short to prevent its taking effect, and not long enough to allow an excessive number of air bubbles to form. At the end of the fifty seconds pump 17 is stopped again for a further ten seconds to permit degassing, as stated above, and to allow baric balance to be established inside the pulp cavity, as will shortly be explained. The quiet stage (ten secs.) then continues to alternate with the recycling stage (fifty secs.) until the endodontic treatment has been completed.

From the constructional standpoint, the apparatus in Figure 1 places the tooth DT about halfway along the hydraulic path of delivery and suction of pump 17 so that there may be symmetry between losses of load in delivery and return. Whenever pump 17 is started up afresh the SAG valve 13 is in its closed position, degassing having been completed in the previous quiet stage; the liquid expelled by elasticity will not return into circulation. The significant points in the hydraulic circuit will therefore assume the following differential pressure values in relation to atmospheric pressure increased by about 600 Pa:

Point a') $\Delta P'_a = -30$ kPa
Point b') $\Delta P'_b = 20$ kPa
Point c') $\Delta P'_c = 10$ kPa
Point d') $\Delta P'_d = -10$ kPa

As already mentioned, capillary tubes 8 and 10 being of the same length, the pulp cavity DT1 in the tooth DT lies half way between the two connections 9 and 11. Assuming losses of load to be reasonably the same between connections 9 and 11, a uniform decrease in pressure levels will also occur along the path between those same points. In that case, inside the pulp cavity DT1, there will be exactly half the algebraic sum of $\Delta P$, namely: $(\Delta P'_c + \Delta P'_d) / 2 = 0$ indicating the presence of atmospheric pressure $P_o$. This state of "baric balance" will be maintained during the entire course of the endodontic treatment because no change takes place in the operational principle of the system when the amount of liquid taken from the other bottles (not shown in the simplified diagram in Figure 1) changes. Repetition of the state of baric balance is needed to allow overpressure, possibly due to formation of gas during chemical reaction in the pulp cavity, to escape through the SAG valve 13, and to satisfy the requirement of keeping the pressure during endodontic devitalising treatment as close as possible to environmental levels.

Clearly some changes can be made to the description given of a preferred realization, by technique in the field but without thereby departing from the scope of the invention as will appear from the following claims.

## Claims

1. System for circulating fluids, including:

   - tubes (6, 19, 7, 8, 10, 12, 16, 18) connectible to an external user (DT);
   - at least one pump (17) connected to said tubes for circulating a liquid within which gaseous bubbles (34, 35, 37) can form;
   - an on-off degassing valve (13) which includes in its turn:

      - a body (21) having a cavity consisting of a lower chamber (22) adjoining an upper chamber (24), the lower chamber (22) having a first and second mouth (25, 27) connected to said tubes (12, 16), respectively for inflow and outflow of said liquid, the upper chamber (24) having a third mouth (29) communicating with the environment;
      - means (31, 32, 33) for obstructing the passage through the third mouth (29) from gas given off by the bubbles, and for making free said passage under an increase of pressure of gas given off by the bubbles with respect to the atmosphere,

      characterized in that:

      - said tubes have capillary diameters;
      - said third mouth (29) is always communicating with the environment;
      - said upper chamber (24) is wider than the lower chamber (22);
      - said passage (23) is localized between the lower (22) and the upper (24) chambers;
      - said obstruction means (31, 32, 33) are free to translate vertically under pressure from gas given off by the bubbles and are configured for obstructing said passage (23) because of their weight and the atmospheric pressure applied on a free surface thereof.

2. System as in claim 1. wherein said passage (23) uniformly widens from said lower chamber (22) to said upper chamber (24).

3. System as in claims 1 or 2, wherein said means (31, 32, 33) of obstruction include a cylindrical body (31) surmounted by a disk (32) and an o-ring (33) in which said cylindrical body (31) is inserted.

4. System as in any one of claims 1 to 3, wherein said pump (17) is of the positive-displacement type, preferably a peristaltic pump.

5. System as in any one of claims 1 to 4, wherein means (2) for filling the hydraulic circuit are included.

6. System as in claim 5, wherein said filling means (2) include said pump (17) and a valve for opening and closing the passage towards a receptacle (3) communicating with the environment.

7. System as in claim 5, wherein said filling means include a second positive-displacement pump (2) connected to a receptacle (3) communicating with the environment.

8. System as in any one claim from 1 to 7, wherein means are included for activating said circulation pump (17) set so that short periods of stoppage alternate with periods of operation.

9. System as in any one claim from 1 to 8, wherein said user (DT) can be placed halfway along the hydraulic circuit.

10. System as in any one claim from 1 to 9, a characteristic of which is that it is usable for endodontic treatment.

## Patentansprüche

1. System zum Umwälzen von Flüssigkeiten, umfassend:

   - Rohre (6, 19, 7, 8, 10, 12, 16, 18), die mit einen externen Betreiber (DT) verbunden werden können;
   - mindestens eine mit den besagten Rohren verbundene Pumpe (17), um eine Flüssigkeit umzuwälzen, in dem sich Gasblasen (34, 35, 37) bilden können;
   - ein Ein-Aus-Entgasungsventil (13), wiederum umfassend:
   - einen Körper (21) mit einer aus einer unteren Klammer (22) bestehenden Ausnehmung, die sich an einer oberen Kammer (24) anschließt, wobei die untere Kammer (22) eine erste und zweite Mündung (25, 27) aufweist, die mit den besagten Rohren (12, 16) jeweils für Zulauf und Ablauf der besagten Flüssigkeit verbunden ist, wobei die obere Klammer (24) eine dritte Mündung (29) aufweist, die mit der Umgebung in Verbindung steht;
- Mittel (31, 32, 33), um den Durchgang durch die dritte Mündung (29) von dem aus den Blasen gegebenen Gas zu behindern, und um den besagten Durchgang frei bei einer Erhöhung des durch die Blasen erzeugen Gasdruckes in Bezug auf die Umwelt zu halten, **dadurch gekennzeichnet, dass**:
- die besagten Rohre kapillare Durchmesser besitzen;
- die besagte dritte Mündung ist immer mit der Umwelt in Verbindung;
- die besagte obere Kammer (24) ist breiter als die untere Kammer (22);
- der besagte Durchgang (23) ist zwischen der unteren (22) und der oberen (24) Kammer angeordnet;
- die besagten Behinderungsmittel (31, 32, 33) sind frei, sich unter dem von den Blasen erzeugten Gasdruck zu bewegten, und sind derart gestaltet, dass sie den besagten Durchgang (23) wegen ihres Gewichtes und des Atmosphärendruckes behindern, der auf einer freien Fläche derselben ausgeübt wird.

2. System nach Anspruch 1, bei dem der besagte Durchgang (23) sich gleichmäßig aus der besagten unteren Kammer (22) zu der besagten oberen Kammer (24) erweitert .

3. System nach Anspruch 2, bei dem die besagten Behinderungsmittel (31, 32, 33) einen zylindrischen von einer Scheibe (32) und einem O-Ring (33) überragten Körper (31) umfassen, in den der besagte zylindrische Körper (31) eingeführt wird.

4. System nach einen der Ansprüche 1 bis 3, bei dem die besagte Pumpe (17) eine Verdränger-Pumpe, vorzugsweise eine peristaltische Pumpe ist.

5. System nach einen der Ansprüche 1 bis 4, bei dem Mittel (2) vorhanden sind, um den Hydraulikkreis zu füllen.

6. System nach Anspruch 5, bei dem die besagten Füllmittel (2) die besagte Pumpe und ein Ventil umfassen, um den Durchgang gegenüber einer Aufnahme zu öffnen und schließen, die mit der Umgebung in Verbindung steht.

7. System nach Anspruch 5, bei dem die besagten Füllmittel eine zweite Verdränger-Pumpe (2) umfassen, die mit einer Aufnahme (3) verbunden ist, die mit der Umgebung in Verbindung steht.

8. System nach einer der Ansprüche 1 bis 7, bei dem Mittel vorhanden sind, um die besagte Verdränger-Pumpe (17) derart zu aktivieren, dass kurze Stillstandzeiten mit Betriebszeiten wechseln.

9. System nach einer der Ansprüche 1 bis 8, bei dem der besagte Bediener (DT) in der Mitte entlang dem hydraulischen Kreis ungeordnet werden kann.

10. System nach einer der Ansprüche 1 bis 9, dessen ein Merkmal darin besteht, dass es für endodontische Behandlung geeignet ist.

**Revendications**

1. Système pour la circulation de fluides, comprenant :

- des tubes (6, 19, 7, 8, 10, 12, 16, 18) connectables à un utilisateur externe (DT) ;
- au moins une pompe (17) connectée aux dits tubes pour la circulation d'un liquide à l'intérieur duquel peuvent se former des bulles gazeuses (34, 35, 37) ;
- une soupape de dégazage on-off (13) qui comprend à la fois :
- un corps (21) avec une cavité constituée d'une chambre inférieure (22) attenant à une chambre supérieure (24), la chambre inférieure (22) étant pourvue d'une première et deuxième bouche (25, 27) connectées aux dits tubes (12, 16), respectivement pour l'entrée et la sortie dudit liquide, la chambre supérieure (24) étant pourvue d'une troisième bouche (29) communiquant avec l'environnement ;
- des moyens (31, 32, 33) pour obstruer le passage à travers la troisième bouche (29) du gaz dégagé par les bulles, et pour rendre libre ledit passage après une augmentation de pression du gaz dégagé par les bulles par rapport à l'atmosphère,

caractérisé en ce que :

- lesdits tubes ont des diamètres capillaires ;
- ladite troisième bouche (29) communique toujours avec l'environnement;
- ladite chambre supérieure (24) est plus large que la chambre inférieure (22) ;
- ledit passage (23) est situé entre la chambre inférieure (22) et la chambre supérieure (24) ;
- lesdits moyens d'obstruction (31, 32, 33) sont libres de se déplacer verticalement sous une pression d'un gaz dégagé par les bulles et sont configurés pour obstruer ledit passage (23) à cause de leur poids et de la pression atmosphérique appliquée sur une surface libre de ceux-ci.

2. Système selon la revendication 1, dans lequel ledit passage (23) s'élargit uniformément de ladite chambre intérieure (22) à ladite chambre supérieure (24).

3. Système selon les revendications 1 ou 2, dans lequel lesdits moyens (31, 32, 33) d'obstruction comprennent un corps cylindrique (31) surmonté d'un disque (32) et un O-Ring (33) dans lequel ledit corps cylindrique (31) est inséré,

4. Système selon une quelconque des revendications 1 à 2, dans lequel ladite pompe 817) est du type à déplacement positif, de préférence une pompe péristaltique.

5. Système selon une quelconque des revendications 1 à 4, dans lequel sont compris des moyens (2) pour remplir le circuit hydraulique.

6. Système selon la revendication 5, dans lequel lesdits moyens de remplissage (2) comprennent ladite pompe (17) et une soupape pour ouvrir et fermer le passage vers un réceptacle (3) communiquant avec l'environnement.

7. Système selon la revendication 5, dans lequel lesdits moyens de remplissage comprennent une deuxième pompe à déplacement positif (2) connectée avec un réceptacle (3) communiquant avec l'environnement.

8. Système selon une quelconque des revendications 1 à 7, dans lequel sont inclus des moyens pour activer ladite pompe de circulation (17) réglée de sorte que des courtes périodes d'arrêt sont alternées avec des périodes de fonctionnement.

9. Système selon une quelconque des revendications 1 à 8, dans lequel ledit utilisateur (DT) peut être placé à mi-chemin le long du circuit hydraulique.

10. Système selon une quelconque des revendications 1 à 9, une caractéristique duquel est ce qu'il est utilisable pour un traitement endodontique.

FIG.1

FIG.2

FIG.3

FIG.5

FIG.4

EP 2 182 879 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6932114 B2
- WO 2007052317 A
- IT MI20052076 A
- WO 9710037 A